# EUROPEAN PATENT SPECIFICATION

(11) **EP 0 412 684 B1**
(45) Date of publication and mention of the grant of the patent: **14.07.1993**
(21) Application number: 90308219.6
(22) Date of filing: 26.07.1990
(51) Int. Cl.: B62D 5/06

(54) **Electromagnetic control apparatus for varying the driver steering effort of a hydraulic power steering system**
Elektromagnetische Regelvorrichtung zum Verändern des Fahrer-Lenkkraftaufwandes einer hydraulischen Servolenkung
Dispositif de contrôle électromagnétique pour varier l'effort fait par le conducteur en se servant d'une direction à assistance hydraulique

(30) Priority: 10.08.1989 US 392164
(43) Date of publication of application: 13.02.1991
(73) Proprietor: GENERAL MOTORS CORPORATION, Detroit Michigan 48202 (US)
(72) Inventor: Eckhardt, Dennis Charles, Saginaw, Michigan 48601 (US); Graber, David Wayne, Millington, Michigan 48746 (US); Pawlak, Andrzej Marian, Troy, Michigan 48098 (US)
(74) Representative: Denton, Michael John

(56) References cited:
- EP-A- 0 163 244
- DE-A- 3 634 215
- GB-A- 2 212 463
- JP-A- 6 243 364
- US-A- 4 629 025

## Description

This invention relates to a hydraulic power assist steering systemn for a motor vehicle, and more particularly, to an electromagnetic control apparatus for varying the driver steering effort required to produce a given level of power assist.

The conventional hydraulic power assist steering system comprises a hydraulic actuator for moving the steering linkage in relation to the fluid flow supplied thereto, and a rotary hydraulic control valve assembly for controlling fluid flow to the hydraulic actuator in relation to the operator exerted steering torque. The control valve assembly generally includes a cylindrical valve body rotatable within the valve housing and a valve spool rotatably disposed within the valve body. Hydraulic fluid is supplied to a cavity formed in the valve spool and the valve body is grooved to receive fluid flow in relation to the amount of relative rotation between valve spool and valve body. The fluid so received is then directed to the actuator so that steering assist is developed in relation to the relative rotation of the valve body and valve spool.

The valve spool is manually rotated by the operator of the motor vehicle and is connected to mechanically drive the steering linkage through a lost motion coupling. A resilient element, such as a torsion bar, couples the valve spool and valve body to provide a centring force for aligning the valve spool and valve body and to permit relative rotation therebetween in relation to operator exerted steering torque, at least within the limitations of the lost motion coupling.

In systems of the type described above, the level of driver steering effort assist required to produce a given level of power assist depends primarily on the compliance of the torsion bar. If the torsion bar has relatively high compliance, a relatively low level of driver steering effort is required. This is generally desirable in low speed operation of a vehicle where relatively high steering forces are required. If the torsion bar has relatively low compliance, a relatively high level of driver steering effort is required. This is generally desirable in high speed operation of a vehicle where relatively low steering forces are required.

To overcome the engineering trade-off described above, various arrangements have been proposed for varying the driver steering effort for a given level of power assist as a function of vehicle speed. An example of one such arrangement is given in US Patent No. 4,629,025. In that arrangement, a controlled portion of the hydraulic fluid pump output is returned to the fluid reservoir of the hydraulic pump to reduce fluid flow to the steering actuator with increasing vehicle speed.

JP-A-62-43364 discloses a steering system comprising an electromagnetic control apparatus for varying the driver steering effort in accordance with the preamble of claim 1. EP-A-349116 which is a prior art document according to Art. 54(3) EPC, discloses a steering system of a type similar to the present invention.

A hydraulic power assist steering system in accordance with the present invention comprises a pair of hydraulic elements which are relatively rotatable and connected between a steering shaft which is driver manipulated and a steering gear, the hydraulic elements being adapted to generate hydraulic flow for producing power assist steering force in relation to their relative rotation such that driver steering effort applied to the steering shaft produces a corresponding level of power assist steering force; and control apparatus for varying the driver steering effort required to produce a given power assist steering force, the control apparatus being electromagnetic and comprising a rotary magnetic circuit including a magnetic element connected for rotation with one of the pair of hydraulic elements, and a rotary magnetic flux conducting element radially displaced from the magnetic element and connected for rotation with the other of the pair of hydraulic elements such that magnetic flux developed by the ring element enters the rotary magnetic flux conducting element to develop a magnet centring force which is rotationally balanced in a centred relative position of the rotary magnetic circuit corresponding to a minimum flow relative position of the hydraulic elements, but which resists relative rotation therefrom; this steering system is characterized in that the magnetic element is a ring element which is cylindrical and a radially magnetized permanent magnet; and wherein the control apparatus further comprises a stationary magnetic circuit including an exciting coil which is annular and disposed in proximity to the rotary magnetic circuit and a stationary flux conducting element for completing an electromagnetic flux path between the rotary and stationary magnetic circuits so that magnetic flux developed in the electromagnetic flux path during energization of the exciting coil produces an electromagnetic centring force which combines with the magnet centring force developed by the ring element to produce an overall centring force which is variable with the coil energization, whereby the driver steering effort required to produce a given relative rotation of the hydraulic elements, and hence a given level of power steering assist force, is variable with such coil energization.

The present invention is directed to a hydraulic power assist steering system having conventional relatively rotatable valve spool and valve body elements for flow regulation, and an integral electromagnetic mechanism which defines a coupling of variable resilience between the valve spool and valve body for adjusting driver steering effort required to produce a given level of power assist.

The integral electromagnetic mechanism of this invention includes a rotary magnetic circuit and a stationary magnetic circuit. The rotary magnetic circuit comprises a pair of relatively rotatable elements, one of which is toothed to conduct magnetic flux and one of which includes permanent magnets for establishing a permanent magnet coupling.

In the illustrated embodiment, the toothed element is defined by a pair of radially displaced magnetic pole pieces and the permanent magnet element is defined by a cylindrical ring element disposed between the magnetic pole pieces. The ring element is supported for rotation with the output (pinion) steering shaft and the pole pieces are supported for rotation with the input (operator driven) steering shaft. The ring element is radially magnetized to define an even number N of axially extending, alternating magnetic polarity sectors. The pole pieces each have N/2 teeth extending toward the respective radial face of the ring element. The stationary magnetic circuit comprises at least one annular exciting coil and ferromagnetic pole element positioned adjacent to and magnetically coupled with the magnetic pole pieces.

The above elements define two magnetic flux paths: a permanent magnet flux path which includes (neglecting leakage flux) only the rotary magnetic circuit elements, and an electromagnetic flux path which includes both the stationary and rotary magnetic circuit elements. The rotary pole pieces and the ring element are oriented such that (1) when the assembly is in the centred position, both flux paths are magnetically balanced, and (2) when there is relative rotation of the input and output steering shafts, the flux in the two paths develop in-phase centring forces which tend to restore the assembly to the centred position. The force due to the electromagnetic flux path is variable over a wide range depending on the magnitude and direction of current supplied to the exciting coil, and such current may be scheduled in relation to the vehicle speed to provide a speed-dependent relationship between the operator input torque and the power assist torque.

In the illustrated embodiment, the mechanism of this invention is used in combination with a conventional torsion bar to define a variable resiliency coupling between the hydraulic fluid supply elements. The combination of the torsion bar and the permanent magnet flux path provide a coupling of intermediate resilience to generate an intermediate level of steering assist for a given driver steering input. Variably energizing the exciting coil with current of one polarity variably increases the resilience of the coupling so that more driver steering effort is required to produce a given level of power assist. Variably energizing the exciting coil with current of the opposite polarity variably decreases the resilience of the coupling so that less driver steering effort is required to produce a given level of power assist. Preferably, the coil energization is scheduled in relation to the speed of the vehicle so that the level of steering assist decreases with increasing vehicle speed. A driver preference input may also be used.

The present invention will now be described, by way of example, with reference to the accompanying drawings, in which:-
Figure 1a is a sectional view of a valve assembly of a hydraulic power assist steering system incorporating electromagnetic control apparatus in accordance with the present invention, and a block diagram of a (computer-based) control unit therefor;
Figure 1b is a cut-away perspective view of the electromagnetic mechanism depicted in Figure 1a;
Figures 2a, 2b and 2c schematically depict a linearized view of the rotary magnetic circuit of the electromagnetic mechanism shown in Figure 1a;
Figure 3 depicts the centring forces generated by the electromagnetic mechanism of Figure 1a as a function of steering shaft rotation for a given vehicle speed;
Figure 4 depicts the variation in driver steering effort achieved by the valve assembly and control unit of Figure 1a for various vehicle speeds; and
Figure 5 is a flow diagram representative of computer program instructions executed by the control unit of Figure 1a in controlling the excitation of the electromagnetic mechanism of this invention.

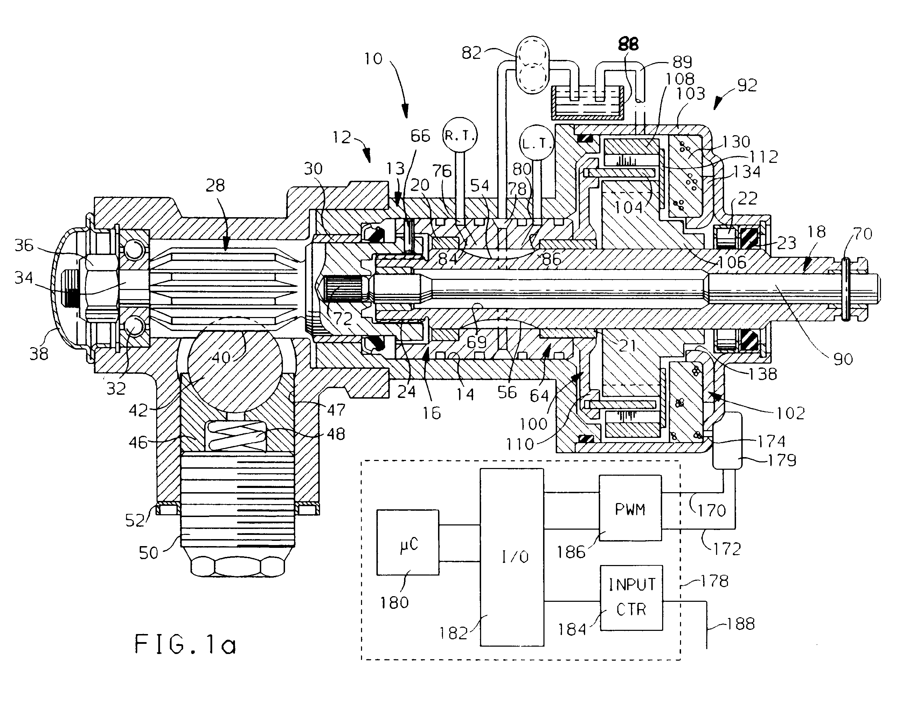

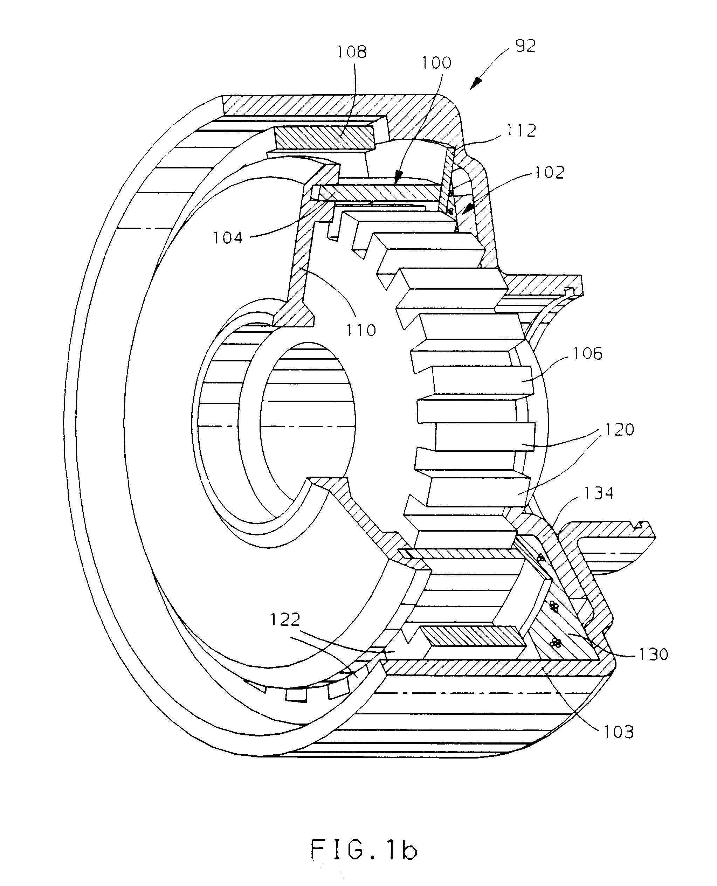

Referring to Figures 1a and 1b, the reference numeral 10 generally designates a portion of hydraulic power assist steering system for a motor vehicle, which is this case is in the form of a hydraulic power assist rack and pinion steering gear, hereinafter referred to as steering gear. The steering gear 10 is disposed within a (three-section) housing 12, the midsection 13 of which defines a (cylindrical smooth wall) bore 14. A (rotary power steering gear) valve assembly 16 disposed within the bore 14 includes an (elongated cylindrical) spool or steering shaft 18 and valve body 64 supported for independent turning movement in the housing 12.

The inboard end of spool shaft 18 is supported on a roller bearing 22, and projects through an annular fluid seal 23 for connection to a conventional steering shaft and operator manipulated handwheel, not shown. The outboard end of the spool shaft 18 is splined as indicated by the reference numeral 24 with an (elongated) pinion or steering gear 28 to define a lost motion mechanical coupling therebetween. The pinion gear 28 is rotatably mounted in the housing 12 by a sleeve bearing 30 and a ball bearing assembly 32 which receives a shank portion 34 of pinion gear 28. A nut 36 threaded onto the outboard end of the shank portion 34 secures the pinion gear 28 with the housing 12. A cup-like cover 38 frictionally fits into the end of the housing 12 to provide service access.

The teeth of pinion gear 28 mesh with a toothed portion 40 of an (elongated) rack 42 mounted for linear sliding movement within the housing 12. The rack 42 is operatively connected to the steerable wheels of the motor vehicle by suitable ball joints and tie rods, not shown. In such an arrangement, the linear movement of the rack 42 turns the steerable wheels of the motor vehicle for vehicle steering purposes.

The rack 42 is also coupled to a fluid operated power cylinder mechanism or actuator, not shown, for applying a steering assist force to rack 42. As described below, the valve assembly 16 is adapted to direct hydraulic fluid to right or left turn (RT, LT) chambers of the power cylinder mechanism to apply right-hand or left-hand steering assist force to rack 42. A power cylinder mechanism meeting the above description is described in detail in US Patent No. 4,454,801.

Close meshing engagement between the teeth of the pinion gear 28 and the rack 42 is achieved by a rack contact shoe 46 which is slidably mounted in a housing bore 47. A helical spring 48 seated between the rack contact shoe 46 and an adjusting plug 50, tensions the contact shoe 46. Adjusting plug 50 is threaded into the end of housing bore 47 and can be axially adjusted therein to vary the spring force. An adjuster plug nut 52 maintains the adjusting plug 50 in a selected position.

The spool shaft 18 of the valve assembly 16 has a (cylindrical) valve spool 54 formed thereon. The valve spool 54 has a plurality of arcuate, axially extending oil transfer slots 56 formed in the periphery thereof. The valve body 64 is rotatably mounted on valve spool 54 via sleeve bearings 20 and 21. The outboard end of the valve body 64 extends over the end of the pinion gear 28 and is drivingly connected thereto by radial pin 66. The valve spool 54 and valve body 64 define hydraulic elements.

The valve body 64 defines right turn, supply and left turn chambers 76, 78, 80 respectively between it and the bore 14. A hydraulic pump 82 supplies fluid to the supply chamber 78, and such fluid is directed to the right turn and left turn chambers 76, 80 respectively via the slots 56 of valve spool 54 and drilled passages 84 and 86, depending on the direction and degree of relative rotation between valve spool 54 and valve body 64. The right turn and left turn chambers 76, 80 are connected to the right (RT) and left (LT) chambers of the power cylinder mechanism (actuator) as indicated for generating a corresponding level of steering assist force in rack 42 as described above. An exhaust passage (not shown) within the valve assembly returns hydraulic fluid to a fluid reservoir 88 for hydraulic pump 82 via line 89. A similar valve assembly 16 and hydraulic system is described in detail in the above-referenced US Patent No. 4,454,801.

A resilient centring coupling between the valve spool 54 and valve body 64 is provided by the combined operation of a torsion bar 90 and the electromagnetic mechanism of this invention, generally designated by the reference numeral 92. Together, the torsion bar 90 and electromagnetic mechanism 92 permit the valve spool 54 to be rotated relative to the valve body 64 in relation to the operator exerted steering torque so that the valve assembly 16 directs fluid to the power cylinder (not shown) for producing the desired level of steering assist force. On termination of the operator exerted steering torque, the torsion bar 90 and electromagnetic mechanism 92 centre the valve body 64 and valve spool 54 to terminate steering assist force.

The torsion bar 90 extends concentrically through an axial opening 69 in the spool shaft 18. A cross pin 70 connects the input end of torsion bar 90 to spool shaft 18. The output end of torsion bar 90 is splined and staked at 72 to the pinion gear 28.

The electromagnetic mechanism 92 comprises rotary and stationary magnetic circuits 100 and 102, respectively, disposed within a (ferromagnetic) housing section 103.

The stationary magnetic circuit 102 comprises an (encapsulated annular) exciting coil 130 supported on a (partially encircling ferromagnetic) pole element 134, which is secured to the housing section 103. The housing section 103 and a pole surface 138 of pole element 134 is positioned in close proximity to the rotary magnetic circuit 100 to facilitate radial transfer of magnetic flux between the stationary and rotary magnetic circuits 102, 100. The lead ends 170, 172 of exciting coil 130 pass through a suitable opening 174 in the housing section 103 and are connected to a (computer-based) control unit 178 via a sealed connector 179. The pole element 134 defines a stationary flux conducting element.

The rotary magnetic circuit 100 comprises a (cylindrical permanent magnet) ring element 104 and a pair of (rotary ferromagnetic) pole pieces 106, 108. The ring element 104 is secured to a rotor hub 110, which is secured onto the outboard end of sleeve bearing 21 for rotation with valve body 64. The pole piece 106 is secured onto the inboard end of spool shaft 18 for rotation therewith. A ring 112 rigidly couples the pole piece 108 to the pole piece 106 to define a rotary magnetic flux conducting element, and establishes a predetermined angular alignment therebetween as explained below. The rotor hub 110 is sized in relation to the pole piece 106 such that in the completed assembly, the ring element 104 is positioned approximately midway between the pole pieces 106 and 108.

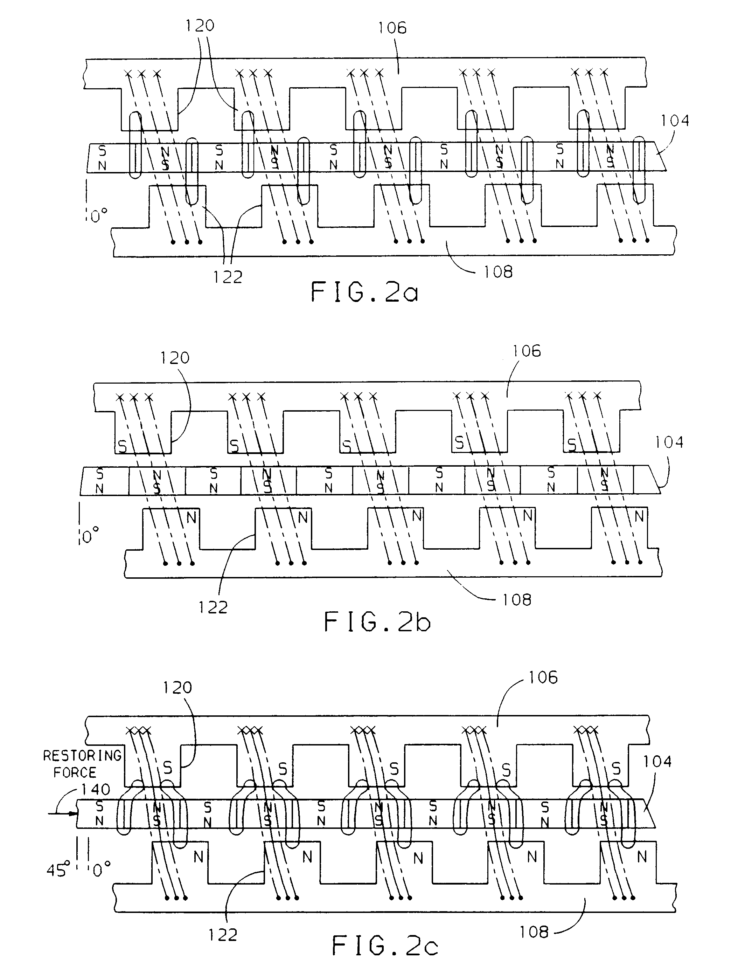

As seen more clearly in the linearized representation of Figures 2a - 2c, the (permanent magnet) ring element 104 is radially magnetized to define an even number N of axially extending, alternating magnetic polarity sectors, and the pole pieces 106, 108 each have N/2 homopolar teeth 120, 122 extending toward the radial faces of the ring element 104. The homopolar teeth 120, 122 are angularly offset by approximately 1/4 pole pitch, and the ring element 104 is oriented such that its magnetic sectors are offset from like polarity teeth of the pole pieces 106, 108 by 1/8 pole pitch when the valve spool 54 and valve body 64 are centred.

As shown in Figures 2a - 2c, the above elements define two magnetic flux paths: a permanent magnet flux path which includes only the rotary magnetic circuit elements 104, 106, 108, and an electromagnetic flux path which additionally includes the stationary magnetic circuit elements 103 and 134.

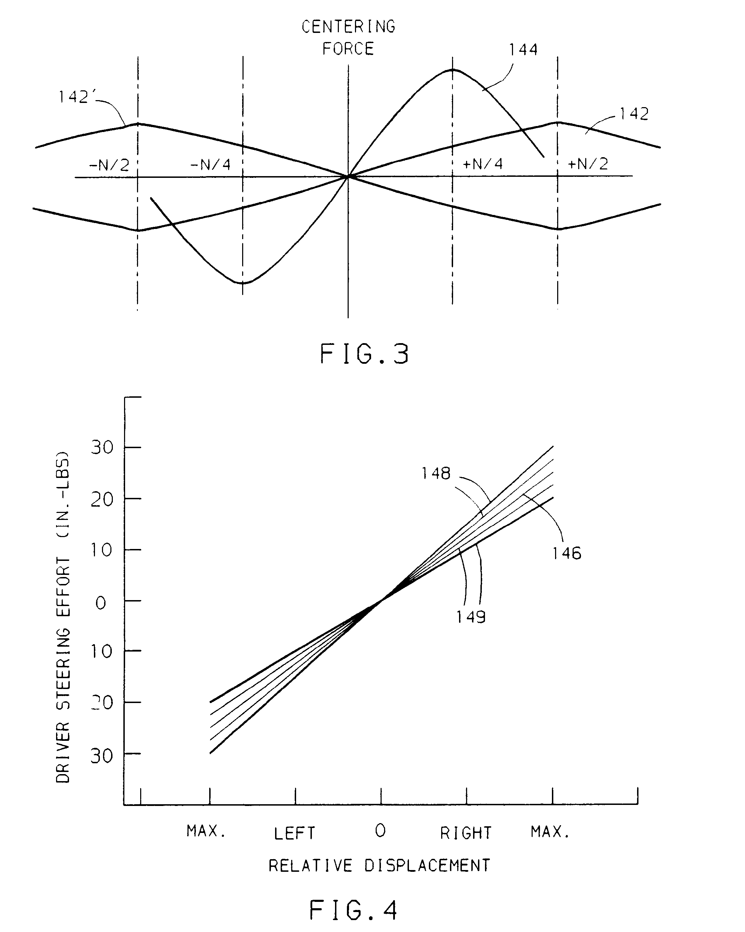

Referring to Figures 2a and 2c, magnetic flux flowing in the permanent magnet flux path is produced solely by the permanent magnets of ring element 104. Such flux exists independent of the (stationary) pole element 134. When the valve spool 54 and valve body 64 are centred, as in Figure 2a, no magnetic centring force (torque) is produced. When there is a relative displacement of the valve spool 54 and valve body 64, as in Figure 2c, the magnetic forces generated by the flux in the permanent magnet flux path become imbalanced and develop a resultant restoring (centring) force in the direction of the arrow 140, with or without energization of the exciting coil 130. Such force varies as a function of relative displacement, as graphically represented by the idealized trace 144 in Figure 3.

Referring to Figures 2b and 2c, and ignoring the effect of the permanent magnets, magnetic flux flowing in the electromagnetic flux path is produced primarily by energization of the exciting coil 130. As indicated by the broken lines, such flux enters the pole piece 108 (NORTH) via the housing section 103, and exits the pole piece 106 via the pole element 134. When the valve spool 54 and valve body 64 are centred, as in Figure 2b, no magnetic centring force is developed. When there is a relative displacement of the valve spool 54 and valve body 64, as in Figure 2c, the magnetic forces generated by the flux in the electromagnetic flux path become imbalanced and develop a resultant restoring (centring) force in the direction of the arrow 140. Such force varies as a function of coil energization and relative displacement, the force for a given coil current magnitude being depicted as a function of relative displacement by the idealized traces 142 and 142' in Figure 3.

The electromagnetic centring force represented by the trace 142 in Figure 3 is produced by energizing the exciting coil 130 with a given current of a first polarity. Such force is additive to the permanent magnet centring force (trace 144), at least for relative displacements of ± N/4 electrical degrees (4.5 mechanical degrees in the illustrated embodiment) or less, where N is the number of magnetic sectors in the ring element 104. The electromagnetic centring force represented by the trace 142' in Figure 3 is produced by energizing the exciting coil 130 with current of the same magnitude, but of opposite polarity. Such force is subtractive to the permanent magnet centring force, at least for relative displacements of ± N/4 electrical degrees or less.

The effective resiliency of the coupling between valve spool 54 and valve body 64 is determined by the sum of the centring forces of the torsion bar 90, the permanent magnet flux path, and the electromagnetic flux path. The combined centring force is depicted as a function of relative displacement in Figure 4. The torsion bar 90 and permanent magnet flux path forces are fixed for a given installation, but the electromagnetic flux path force is variable with the exciting coil energization current magnitude and direction, and results in the family of curves depicted in Figure 4, and described below.

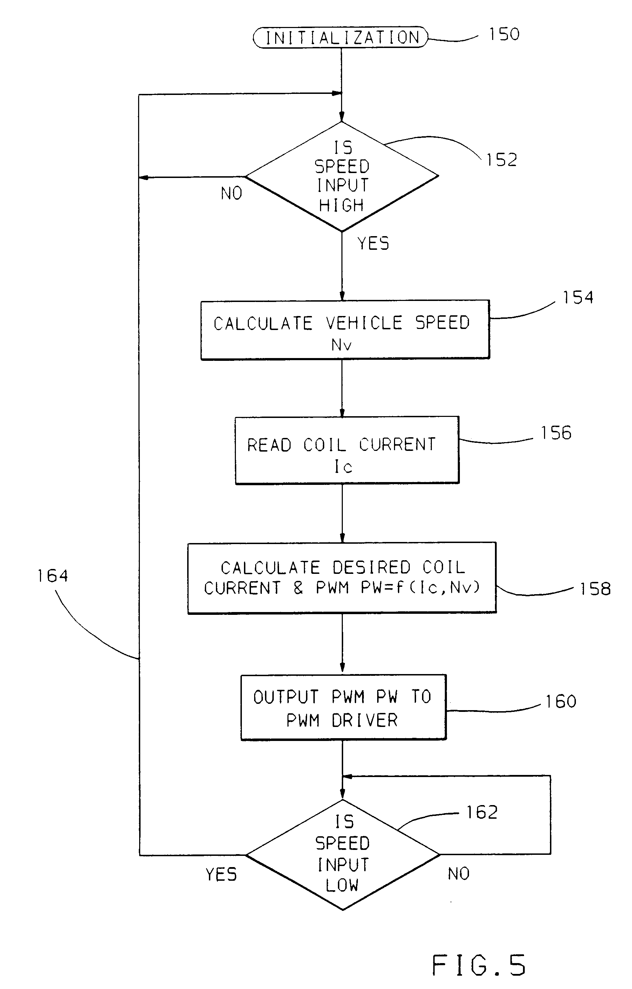

The control unit 178 of Figure 1a is supplied with operating power from the vehicle storage battery (not shown), and comprises a microcomputer (uC) 180, an input/output (I/O) device 182, an input counter (INPUT CTR) 184, and a pulse-width-modulation driver (PWM) 186, all of which may be conventional devices. The microcomputer 180 communicates with the remainder of the system via I/O device 182; in response to various input information, microcomputer 180 executes a series of predetermined program instructions for developing an output command pertaining to the required energization of the exciting coil 130. Program instructions are described below in reference to the flow diagram of Figure 5.

The primary control unit input is an oscillatory vehicle speed signal on line 188, which may be obtained from a conventional speed pickup, not shown. The speed signal is applied to the I/O device 182 through the input counter 184, which divides the frequency of the speed signal by a predetermined factor. The PWM command for exciting coil 130 is applied to the (bidirectional) PWM driver 186 (which may take the form of a conventional H-switch driver) for correspondingly modulating the exciting coil 130 with current from the vehicle storage battery, not shown. A signal indicative of the coil current is developed by the PWM driver 186 on line 176 with a suitable current shunt, such signal being applied as an input to an analogue port of the I/O device 182 for use in a closed-loop control of the coil current. Open-loop voltage control may alternately be employed, if desired.

According to the illustrated embodiment, the combined effect of the torsion bar 90 and the permanent magnet flux path centring forces produce an intermediate level of steering assist, represented by the trace 146 in Figure 4. This level of assist is most suitable for an intermediate vehicle speed such as 48.3 kph (30 miles per hour). With increasing vehicle speed, the control unit 178 begins energizing the exciting coil 130 with progressively increasing levels of a first polarity current to increase the driver steering effort per unit relative displacement of the valve spool 54 and valve body 64, as indicated by the traces 148. With decreasing vehicle speed, the control unit 178 begins energizing the exciting coil 130 with progressively increasing levels of the opposite polarity current to reduce the driver steering effort per unit relative displacement of the valve spool 54 and valve body 64, as indicated by the traces 149. This produces a variable effort effect since the level of power assist is directly related to the relative displacement of the valve spool 54 and valve body 64.

The maximum relative displacement limits (MAX) are defined by the splined lost motion coupling between spool shaft 18 and pinion gear 28. Once the maximum displacement has occurred, further rotation of the steering wheel is mechanically transmitted to the pinion gear 28 via the coupling. In the illustrated embodiment, the coupling permits relative displacements of approximately ± 4.5 mechanical degrees (N/4 electrical degrees), the region over which the combination of the permanent magnet and electromagnetic centring forces is linear or quasi-linear.

It should be recognized, of course, that alternative control methods may be employed. For example, the torsion bar 90 could be designed so that the combination of its centring force and the permanent magnet flux centring force provides an extreme level of steering assist. In this event, the control unit 178 could effect unidirectional current control of the exciting coil 130 to adjust the overall resilience of the valve body/spool coupling. In such case, the (bidirectional) PWM driver 186 could be replaced with a unidirectional driver.

As a further control alternative, the torsion bar 90 could be dispensed with completely. In such an arrangement, the base level (that is, no coil current) of steering assist would be determined solely by the centring force produced by the flux of the permanent magnet flux path. As with the other embodiments, such centring force could be varied through energization of the exciting coil 130 with either unidirectional or bidirectional current.

Regardless of the control method employed, Figure 5 depicts a simplified flow diagram representative of computer program instructions which would be executed by the control unit 178 of Figure 1a in carrying out the control. Block 150 designates a series of program instructions executed at the initiation of each period of vehicle operation for initializing the various registers and program variable to predetermined values. Thereafter, blocks 152 to 162 are executed as explained below.

The decision blocks 152 and 162 detect a low to high transition of the vehicle speed signal output of input counter 184. When the transition is detected, the instruction blocks 154, 156, 158 and 160 are sequentially executed to calculate the vehicle speed Nᵥ, to read the coil current value I_{c}, and to calculate and output a PWM pulse width to the PWM driver 186. Calculation of the vehicle speed at instruction block 154 is based on the elapsed time between low-to-high transitions of the input counter carry bit, such time being inversely proportional to vehicle speed Nᵥ. Calculation of the PWM pulse width command is based on the deviation of the desired coil current from the measured coil current I_{c}, the desired current being determined in accordance with vehicle speed, as indicated in Figure 4.

While this invention has been described in reference to the illustrated embodiment, various modifications will occur to those skilled in the art. In essential form, the control apparatus of this invention comprises a stationary magnetic circuit and a rotary magnetic circuit including at least two relatively rotatable elements. The function of the magnetic circuits can be achieved with alternate configurations. Moreover, various control parameters, such as driver preference (light, medium or heavy effort) or pressure feedback may be used, either separately or in combination with the above-described vehicle speed parameter.

## Claims

1. A hydraulic power assist steering system comprising a pair of hydraulic elements (54,64) which are relatively rotatable and connected between a steering shaft (18) which is driver manipulated and a steering gear (28), the hydraulic elements being adapted to generate hydraulic flow for producing power assist steering force in relation to their relative rotation such that driver steering effort applied to the steering shaft produces a corresponding level of power assist steering force;
and control apparatus for varying the driver steering effort required to produce a given power assist steering force, the control apparatus being electromagnetic and comprising a rotary magnetic circuit (100) including a magnetic element (104) connected for rotation with one of the pair of hydraulic elements, and a rotary magnetic flux conducting element (106,108) radially displaced from the magnetic element and connected for rotation with the other of the pair of hydraulic elements such that magnetic flux developed by the magnetic element enters the rotary magnetic flux conducting element to develop a magnet centring force which is rotationally balanced in a centred relative position of the rotary magnetic circuit corresponding to a minimum flow relative position of the hydraulic elements, but which resists relative rotation therefrom;
characterised in that the magnetic element is a ring element (104) which is cylindrical and a radially magnetized permanent magnet; and in that the control apparatus further comprises a stationary magnetic circuit (102) including an exciting coil (130) which is annular and disposed in proximity to the rotary magnetic circuit and a stationary flux conducting element (134) for completing an electromagnetic flux path between the rotary and stationary magnetic circuits so that magnetic flux developed in the electromagnetic flux path during energization of the exciting coil produces an electromagnetic centring force which combines with the magnet centring force developed by the ring element to produce an overall centring force which is variable with the coil energization, whereby the driver steering effort required to produce a given relative rotation of the hydraulic elements, and hence a given level of power steering assist force, is variable with such coil energization.

2. A hydraulic power assist steering system as claimed in Claim 1, wherein the stationary flux conducting element (134) includes a housing section (103) disposed about the rotary and stationary magnetic circuits (100,102).

3. A hydraulic power assist steering system as claimed in Claim 1 or Claim 2, additionally including a resilient element (90) mechanically coupling the hydraulic elements (54,64) to develop a mechanical centring force which is rotationally balanced in the centred relative position of the rotary magnetic circuit (100), but which resists relative rotation therefrom, whereby the basic resilient coupling between the hydraulic elements is defined by the combination of the permanent magnet and mechanical centring forces.

4. A hydraulic power assist steering system as claimed in Claim 3, wherein the resilient element is a torsion bar (90).

5. A hydraulic power assist steering system as claimed in any one of Claims 1 to 4, wherein the rotary magnetic flux conducting element of the rotary magnetic circuit (100) is defined by a pair of rigidly coupled pole pieces (106,108) oppositely disposed about the ring element (104); and the stationary flux conducting element of the stationary magnetic circuit (102) includes a pole element (134) situated in close proximity to the pole pieces.

6. A hydraulic power assist steering system as claimed in Claim 5, wherein the ring element (104) has N sectors of alternating magnetic polarity; and at least one of the pole pieces (106,108) has N/2 radially extending teeth (120,122) disposed in close proximity to a radial face of the ring element.

7. A hydraulic power assist steering system as claimed in Claim 5, wherein the ring element (104) has N sectors of alternating magnetic polarity; and the pole pieces (106,108) each have N/2 homopolar teeth extending radially toward opposite radial faces of said permanent magnet ring.

8. A hydraulic power assist steering system as claimed in Claim 7, wherein the teeth of the pole pieces (106,108) are angularly offset by approximately 1/4 of a permanent magnet pole pitch; and the ring element (104) is positioned relative to the pole pieces such that the radial faces of its permanent magnet sectors are angularly offset from like polarity teeth of the pole pieces by approximately 1/8 of a permanent magnet pole pitch when the hydraulic elements (54,64) are in the minimum flow relative position.

## Patentansprüche

1. Hydraulische Servolenkung mit zwei hydraulischen Elementen (54, 64), die relativ drehbar sind und zwischen einer Lenkwelle (18), die vom Fahrer bewegt wird, und einem Lenkzahnrad (28) verbunden sind, wobei die hydraulischen Elemente geeignet sind, einen hydraulischen Fluß zur Erzeugung einer Unterstützungsteuerkraft mit Bezug auf ihre relative Rotation so zu erzeugen, daß der Fahrerlenkkraftaufwand, der auf die Lenkwelle ausgeübt wird, ein entsprechendes Maß an Servolenkkraft erzeugt; und einer Steuervorrichtung zum Verändern des Fahrerlenkkraftaufwands, der benötigt wird, um eine vorgegebene Unterstützungssteuerkraft zu erzeugen, wobei die Steuervorrichtung elektromagnetisch wirkt und einen Drehmagnetkreis (100), der ein magnetisches Element (104) umfaßt, das zur Rotation mit einem der hydraulischen Elemente verbunden ist, und ein Drehmagnetflußleitelement (106, 108) umfaßt, das radial zum Magnetelement versetzt ist und zur Rotation mit dem anderen der Hydraulikelemente so verbunden ist, daß der von dem Magnetelement entwickelte Magnetfluß in das Drehmagnetflußleitelement eindringt, um eine Magnetzentrierungskraft zu erzeugen, die in einer zentrierten Relativposition des Drehmagnetkreises im Drehgleichgewicht steht, die einer Minimalflußrelativposition der hydraulischen Elemente entspricht, jedoch einer relativen Rotation von dieser widersteht;
dadurch **gekennzeichnet**,
daß das Magnetelement ein Ringelement (104) ist, das zylindrisch ausgebildet und ein radial magnetisierter Permanentmagnet ist; und daß die Steuervorrichtung weiter umfaßt: einen Stationär-Magnetkreis (102), der eine Erregerspule (130) umfaßt, die ringförmig und in der Nähe des Drehmagnetkreises angeordnet ist, und ein Stationärflußleitelement (134) zum Vervollständigen eines elektromagnetischen Flußweges zwischen den Dreh- und Stationärmagnetkreisen, so daß ein in dem elektromagnetischen Flußweg während der Beaufschlagung der Erregerspule hervorgerufener Magnetfluß eine elektromagnetische Zentrierungkraft erzeugt, die mit der magnetischen Zentrierungskraft zusammenwirkt, welche durch das Ringelement hervorgerufen wird, um eine Gesamtzentrierungskraft zu erzeugen, die mit der Spulenbeaufschlagung veränderlich ist, wodurch der Fahrerlenkkraftaufwand, der benötigt wird, um eine vorgegebene relative Rotation der hydraulischen Elemente zu erzeugen und somit ein vorgegebenes Maß an Servolenkkraft, mit dieser Spulenbeaufschlagung veränderbar ist.

2. Hydraulische Servolenkung nach Anspruch 1,
bei der das Stationärflußleitelement (134) einen Gehäuseabschnitt (103) umfaßt, der um die Dreh- und Stationärmagnetkreise (100, 102) angeordnet ist.

3. Hydraulische Servolenkung nach Anspruch 1 oder 2,
die zusätzlich ein elastisches Element (90) umfaßt, das die hydraulischen Elementen (54, 64) mechanisch koppelt, um eine mechanische Zentrierungskraft zu erzeugen, die in der zentrierten Relativposition des Drehmagnetkreises (100) drehausgeglichen ist, jedoch einer relativen Rotation von dieser widersteht, wodurch die elastische Grundkopplung zwischen den hydraulischen Elementen, durch die Kombination der Permanentmagnet- und mechanischen Zentrierungskräfte definiert ist.

4. Hydraulische Servolenkung nach Anspruch 3,
bei der das Elastizitätselement ein Torsionsstab (90) ist.

5. Hydraulische Servolenkung nach einem der Ansprüche 1 bis 4, bei der das Drehmagnetflußleitelement des Drehmagnetkreises (100) durch zwei starr gekoppelte Polstücke (106 108) definiert ist, die gegenüberliegend um das Ringelement (104) angeordnet sind; und das Stationärflußleitelement des Stationärmagnetkreises (102) ein Polelement (134) umfaßt, das sehr nahe den Polstücken angeordnet ist.

6. Hydraulische Servolenkung nach Anspruch 5,
bei der das Ringelement (104) N Abschnitte mit alternierenden Magnetpolaritäten aufweist; und zumindest eines der Polstücke (106, 108) N/2 sich radial erstreckende Zähne (120, 122) aufweist, die sehr nahe der radialen Fläche des Ringelements angeordnet sind.

7. Hydraulische Servolenkung nach Anspruch 5,
bei der das Ringelement (104) N Abschnitte mit alternierenden Magnetpolaritäten aufweist; und die Polstücke (106, 108) jeweils N/2 homopolare Zähne aufweisen, die sich radial in Richtung der entgegengesetzten radialen Flächen des Permanentmagnetrings erstrecken.

8. Hydraulische Servolenkung nach Anspruch 7,
bei der die Zähne der Polstücke (106, 108) um ungefähr 1/4 der Permanentmagnetpolabstände winkelverschoben sind; und das Ringelement (104) relativ zu den Polstücken so angeordnet ist, daß die radialen Flächen ihrer Permanentmagnetabschnitte von Zähnen der Polstücke mit gleicher Polarität um ungefähr 1/8 der Permanentmagnetpolabstände winkelverschoben sind, wenn sich die Hydraulikelemente (54, 64) in der Minimalflußrelativposition befinden.

## Revendications

1. Système de direction à assistance hydraulique comprenant une paire d'éléments hydrauliques (54, 64) qui peuvent tourner l'un par rapport à l'autre et qui sont reliés entre un arbre de direction (18) qui est manipulé par le conducteur et un mécanisme de direction (28), les éléments hydrauliques étant adaptés pour engendrer un écoulement hydraulique pour produire une force de direction à puissance assistée en relation avec leur rotation relative de sorte que l'effort de direction fait par le conducteur appliqué à l'arbre de direction produise un niveau correspondant de force de direction à puissance assistée; et un appareil de commande pour faire varier l'effort de direction fait par le conducteur, nécessaire pour produire une force de direction donnée de puissance assistée, l'appareil de commande étant électromagnétique et comprenant un circuit (100) magnétique rotatif comprenant un élément magnétique (104) relié à rotation avec un élément de la paire d'éléments hydrauliques, et un élément conducteur (106, 108) de flux magnétique rotatif radialement déplacé par rapport à l'élément magnétique et relié à rotation avec l'autre élément de la paire d'éléments hydrauliques de sorte que le flux magnétique développé par l'élément magnétique pénètre dans l'élément conducteur de flux magnétique rotatif pour développer une force de centrage de l'aimant qui est équilibrée en rotation dans une position relative centrée du circuit magnétique rotatif correspondant à une position relative d'écoulement minimum des éléments hydrauliques, mais qui résiste par rapport à leur rotation relative; caractérisé en ce que l'élément magnétique est un élément en anneau (104) qui est cylindrique et un aimant permanent aimanté radialement; et en ce que l'appareil de commande comporte en outre un circuit magnétique fixe (102) comprenant une bobine d'excitation (130) qui est annulaire et disposée à proximité du circuit magnétique rotatif et un élément (134) conducteur de flux fixe pour compléter un trajet de flux électromagnétique entre les circuits magnétiques rotatif et fixe de sorte que le flux magnétique développé dans le trajet du flux électromagnétique au cours de l'alimentation de la bobine d'excitation produit une force de centrage électromagnétique qui se combine avec la force de centrage de l'aimant développée par l'élément en anneau pour produire une force de centrage totale qui est variable avec l'alimentation de la bobine, de sorte que l'effort de direction fait par le conducteur, nécessaire pour produire une rotation relative donnée des éléments hydrauliques, et par conséquent un niveau donné de force de direction assistée, est variable avec une telle alimentation de la bobine.

2. Système de direction à assistance hydraulique selon la revendication 1, dans lequel l'élément (134) de conduction du flux fixe comporte une section (103) de boîtier disposée autour des circuits magnétiques rotatif et fixe (100, 102).

3. Système de direction à assistance hydraulique selon la revendication 1 ou la revendication 2, comprenant en outre un élément élastique (90) couplant mécaniquement les éléments hydrauliques (54, 64) pour développer une force de centrage mécanique qui est équilibrée en rotation dans la position relative centrée du circuit magnétique rotatif (100), mais qui résiste par rapport à leur rotation relative, de sorte que le couplage élastique de base entre les éléments hydrauliques est défini par la combinaison des forces de l'aimant permanent et de centrage mécanique.

4. Système de direction à assistance hydraulique selon la revendication 3, dans lequel l'élément élastique est une barre de torsion (90).

5. Système de direction à assistance hydraulique selon l'une quelconque des revendications 1 à 4, dans lequel l'élément conducteur de flux magnétique rotatif du circuit magnétique rotatif (100) est défini par une paire de pièces polaires (106, 108) à couplage rigide disposées de manière opposée autour de l'élément en anneau (104); et l'élément conducteur de flux fixe du circuit magnétique fixe (102) comporte un élément polaire (134) situé à proximité immédiate des pièces polaires.

6. Système de direction à assistance hydraulique selon la revendication 5, dans lequel l'élément en anneau (104) possède N secteurs de polarité magnétique alternée; et au moins l'une des pièces polaires (106, 108) possède N/2 dents (120, 122) disposées radialement, placées à proximité immédiate d'une face radiale de l'élément en anneau.

7. Système de direction à assistance hydraulique selon la revendication 5, dans lequel l'élément en anneau (104) possède N secteurs de polarité magnétique alternée; et les pièces polaires (106, 108) ont chacune N/2 dents homopolaires s'étendant radialement vers les faces radiales opposées dudit anneau d'aimant permanent.

8. Système de direction à assistance hydraulique selon la revendication 7, dans lequel les dents des pièces polaires (106, 108) sont angulairement décalées d'approximativement 1/4 de pas polaire de l'aimant permanent; et l'élément en anneau (104) est positionné par rapport aux pièces polaires de sorte que les faces radiales de ses secteurs d'aimant permanent soient angulairement décalées des dents de même polarité des pièces polaires d'approximativement 1/8 de pas polaire de l'aimant permanent lorsque les éléments hydrauliques (54, 64) sont dans la position relative d'écoulement minimum.
